# EUROPEAN PATENT SPECIFICATION

(11) **EP 1 083 021 B1**
(45) Date of publication and mention of the grant of the patent: **08.12.2004**
(21) Application number: 98909202.8
(22) Date of filing: 05.03.1998
(51) Int. Cl.: B23K 35/362

(54) **WELDING FLUX**
SCHWEISSMITTEL
FLUX A SOUDER

(30) Priority: 20.03.1997 UZ 9700228
(43) Date of publication of application: 14.03.2001
(73) Proprietor: Saidov, Rustam Mannapovich, Tashkent, 700132 (UZ)
(72) Inventor: Saidov, Rustam Mannapovich, Tashkent, 700132 (UZ)
(74) Representative: Laget, Jean-Loup
(86) International application number: PCT/UZ1998/000001
(87) International publication number: WO 1998/041351

(56) References cited:
- SU-A1- 220 020
- SU-A1- 680 839
- SU-A1- 797 861
- SU-A1- 1 382 629
- US-A- 3 621 188
- US-A- 4 368 371
- US-A- 4 643 348
- DATABASE WPI Section Ch, Week 198840 Derwent Publications Ltd., London, GB; Class M23, AN 1988-283804 XP002181241 & SU 1 382 629 A (TASHKENT POLY), 23 March 1988 (1988-03-23)
- SCHWEISSEN UND SCHNEIDEN., vol. 27, no. 10, October 1975 (1975-10), pages 389-394, XP002181240 DEUTSCHER VERLAG FUR SCHWEISSTECHNIK. DUSSELDORF., DE ISSN: 0036-7184

## Description

The invention refers to welding production, in particular, to fluxes for fusion welding of aluminium and its alloys.

The following flux for welding of aluminium and its alloys is known (Inventor's certificate of the USSR Nº 420426, s. B 23 K35/362, 1972), containing mass %:

| | |
|---|---|
| Calcium fluoride | 20-30 |
| Lithium fluoride | 20-30 |
| Magnesium fluoride | 20-30 |
| Strontium fluoride | 20-30 |
| One of metals with great affinity to oxygen | 0,5-10 |

The flux is used as a paste and conduces to oxide inclusions reduction in joint welds, but don't ensure qualitative formation of the joint weld root, as well as flux and slag residues are not removed after welding. Flux and slag residues may cause welded joint corrosion. Besides, the flux is characterised by poor adherence with welded edges surface, conducing its shedding at parts preparation to welding.

The following flux for welding of aluminium and its alloys is known (Inventor's certificate of the USSR Nº 220020, s. B 23 K35/362, 1967), containing, mass % :

| | |
|---|---|
| Calcium fluoride | 2-20 |
| Lithium fluoride | 2-20 |
| Barium fluoride | 2-20 |
| Lithium chloride | 10-40 |
| Barium chloride | 5-30 |
| Potassium chloride | 20-60 |

The flux possesses good welding and processing properties, i.e. good adherence with the surface of welded parts and its residues are flushed out with water after welding. But, presence of lithium chloride in its composition makes it hygroscopic that hinders the process of the flux production and operation. Hygroscopicity of the flux also promotes improvement of its corrosive activity. Therefore compounds (lap joints, keyed joints, etc.) where removal of flux and slag residues after welding is obstructed are exposed to corrosive injury.

The closest by component composition to the suggested one is the flux of TFA-13 mark (Inventor's certificate of the USSR Nº 1382629, s. B 23 K35/362, 1987), containing, mass % :

| | |
|---|---|
| Calcium fluoride | 2-3,5 |
| Lithium fluoride | 8-14 |
| Magnesium fluoride | 8-14 |
| Barium fluoride | 2-3,5 |
| Sodium chloride | 20-35 |
| Potassium chloride | 35-55 |

The flux is characterised by low hygroscopicity, good adherence with the surface of welded articles and full flushing out after welding. Application of the said flux at gas welding of thien-sheet products (to 3,0 mm) of aluminium and its alloys provides obtaining of qualitative joint welds without oxide inclusions and large porosity.

But, welded joints of aluminium alloys obtained at welding with TFA-13 flux don't provide good formation of joint weld penetration. The weld's root is characterised by big sagging and abrupt junction from melted metal to the basic one. In the point of the abrupt junction from the basic metal to the melted formation of stress concentration, causing further fracture of the welded joint, especially of products and structures, being under dynamic loads is observed.

In accordance with the aforesaid task of the invention is improvement of welded joints formation quality at fusion welding with flux, possessing optimum complex of welding and processing, metallurgical and physical and chemical properties.

The set task is solved so that the flux composition for welding, mainly in the form of a paste, consisting of calcium fluoride, lithium fluoride, magnesium fluoride, barium fluoride, potassium chloride and sodium chloride contains additionally alkali-earth metals chloride in the following components ratio, mass %:

| | |
|---|---|
| Calcium fluoride | 1-15 |
| Lithium fluoride | 2-20 |
| Magnesium fluoride | 2-12 |
| Barium fluoride | 1-7 |
| Potassium chloride | 15-35 |
| Sodium chloride | 10-40 |
| Alkali-earth metal chloride | 15-25 |

Fluorides of lithium, magnesium, calcium, barium allow to obtain a mixture, promoting effective removal of oxide films and porosity, as well as reliable weld rood environmental effect control.

Chlorides of sodium, potassium and one of alkali- earth metals at welding form complex compound with poor moisture absorption, promoting improvement of joint welds penetration formation, flushing out flux and slag with water and possessing good adherence with welded articles surface, as well as allowing in mixture with the said fluorides to obtain a flux with optimum complex of physical-and-chemical, metallurgical and welding and processing properties.

When using the suggested flux as a paste it's mixed in alcohol or acetone. Before mixing flux components are calcined at 200° C during 1 hour.

The obtained flux-paste is applied with a brush, a flexible polyurethane roller or an atomiser to the welded edges. The point of flux-past application depends on a fusion welding method and system of alloyage of aluminium alloys. Moreover effective removal of oxide inclusions and large porosity, reliable protection of molten pool metal against environment effect and good formation of a joint weld are ensures. Besides, at laser welding with the flux use of the suggested composition sputtering of molten pool metal is reduced and plasma formation over the molten pool is suppressed.

For experimental review of physical-and-chemical, metallurgical and welding-and-processing properties of the suggested flux different component ratio fluxes in specified value range have been produced. magnesium chloride was used as one of chlorides of alkali earth metal. Experimental compositions and their properties are given in table 1.

Each of the values given in the table is arithmetical mean of no less than three measurements after welding of plates of aluminium alloy 5086 of 2,0 mm thickness, 300 mm length, 100 mm width.

All composition, being in the specified value range (examples 1,2,3,4), cause removal of oxide inclusions and large porosity, qualitative formation of a joint weld and reliable protection of a molten pool against environment effect.

Vice versa, fluxes (examples 5,6,7), compositions of which exceed the specified value ranges either possess poor welding and processing properties (example 5 and 6), or don't conduce to effective removal of oxide inclusions and porosity (example 7).

**Table 1.**

| Example | Flux composition, mass % | | Weld width from the penetration side, b, mm | Joint weld penetration sagging, h, mm | Penetration coefficient, b/h | Presence of large pores (more than 0,2 mm) in joint welds | Presence of oxide inclusions lₒᵢ/l_{w} | Flushing out flux residues in water |
|---|---|---|---|---|---|---|---|---|
| 1 | 2 | | 3 | 4 | 5 | 6 | 7 | 8 |
| 1 | Calcium fluoride | 15 | 6,3 | 0,87 | 7,24 | 0 | 0 | good |
| | Lithium fluoride | 2 | | | | | | |
| | Magnesium fluoride | 12 | | | | | | |
| | Barium fluoride | 1 | | | | | | |
| | Potassium chloride | 15 | | | | | | |
| | Sodium chloride | 40 | | | | | | |
| | Magnesium chloride | 15 | | | | | | |
| 2 | Calcium fluoride | 1 | 6,5 | 0,85 | 7,65 | 0 | 0 | good |
| | Lithium fluoride | 20 | | | | | | |
| | Magnesium fluoride | 2 | | | | | | |
| | Barium fluoride | 7 | | | | | | |
| | Potassium chloride | 35 | | | | | | |
| | Sodium chloride | 10 | | | | | | |
| | Magnesium chloride | 25 | | | | | | |
| 3 | Calcium fluoride | 7 | 6,2 0,89 | 0,89 | 6,97 | 0 | 0 | good |
| | Lithium fluoride | 10 | | | | | | |
| | Magnesium fluoride | 6 | | | | | | |
| | Barium fluoride | 4 | | | | | | |
| | Potassium chloride | 25 | | | | | | |
| | Sodium chloride | 30 | | | | | | |
| | Magnesium chloride | 18 | | | | | | |
| 4 | Calcium fluoride | 15 | 6,3 | 0,89 | 7,08 | 0 | 0 | good |
| | Lithium fluoride | 20 | | | | | | |
| | Magnesium fluoride | 2 | | | | | | |
| | Barium fluoride | 1 | | | | | | |
| | Potassium chloride | 35 | | | | | | |
| | Sodium chloride | 10 | | | | | | |
| | Magnesium chloride | 17 | | | | | | |
| 5 | Calcium fluoride | 16 | 6,5 | 0,79 | 8,23 | 0 | 0 | poor |
| | Lithium fluoride | 21 | | | | | | |
| | Magnesium fluoride | 1 | | | | | | |
| | Barium fluoride | 1 | | | | | | |
| | Potassium chloride | 36 | | | | | | |
| | Sodium chloride | 9 | | | | | | |
| | Magnesium chloride | 16 | | | | | | |
| 6 | Calcium fluoride | 15 | 6,6 | 0,81 | 8,15 | 0 | 0 | good |
| | Lithium fluoride | 2 | | | | | | |
| | Magnesium fluoride | 12 | | | | | | |
| | Barium fluoride | 1 | | | | | | |
| | Potassium chloride | 15 | | | | | | |
| | Sodium chloride | 40 | | | | | | |
| | Barium chloride | 15 | | | | | | |
| 7 | Calcium fluoride | 0.5 | 5,7 | 1,13 | 5,04 | 4 | 0,06 | good |
| | Lithium fluoride | 1 | | | | | | |
| | Magnesium fluoride | 2,5 | | | | | | |
| | Barium fluoride | 8 | | | | | | |
| | Potassium chloride | 14 | | | | | | |
| | Sodium chloride | 41 | | | | | | |
| | Magnesium chloride | 23 | | | | | | |

## Claims

1. Flux for welding, consisting of calcium fluoride, lithium fluoride, magnesium fluoride, barium fluoride, potassium chloride and sodium chloride and alkali-earth metal chloride in addition under the following components ratio, mass %:
| | |
|---|---|
| Calcium fluoride | 1-15 |
| Lithium fluoride | 2-20 |
| Magnesium fluoride | 2-12 |
| Barium fluoride | 1 - 7 |
| Potassium chloride | 15-35 |
| Sodium chloride | 10-40 |
| Alkali-earth metal chloride | 15 - 25 |

2. Flux according to claim 1 having the following components ratio, mass % :
| | |
|---|---|
| Calcium fluoride | 15 |
| Lithium fluoride | 2 |
| Magnesium fluoride | 12 |
| Barium fluoride | 1 |
| Potassium chloride | 15 |
| Sodium chloride | 40 |
| Magnesium chloride | 15 |

3. Flux according to claim 1 having the following components ratio, mass %:
| | |
|---|---|
| Calcium fluoride | 1 |
| Lithium fluoride | 20 |
| Magnesium fluoride | 2 |
| Barium fluoride | 7 |
| Potassium chloride | 35 |
| Sodium chloride | 10 |
| Magnesium chloride | 25 |

4. Flux according to claim 1 having the following components ratio, mass %:
| | |
|---|---|
| Calcium fluoride | 7 |
| Lithium fluoride | 10 |
| Magnesium fluoride | 6 |
| Barium fluoride | 4 |
| Potassium chloride | 25 |
| Sodium chloride | 30 |
| Magnesium chloride | 18 |

5. Flux according to claim 1 having the following components ratio, mass %:
| | |
|---|---|
| Calcium fluoride | 15 |
| Lithium fluoride | 20 |
| Magnesium fluoride | 2 |
| Barium fluoride | 1 |
| Potassium chloride | 35 |
| Sodium chloride | 10 |
| Magnesium chloride | 17 |

## Patentansprüche

1. Flussmittel für das Schweißen, Kalzium-Fluorid, Lithium-Fluorid, Magnesium-Fluorid, Barium-Fluorid, Kalium-Chlorid und Natrium-Chlorid und Alkalisch-Erdmetall Chlorid außerdem unter dem folgenden Teilverhältnis, massen %:
| | |
|---|---|
| Kalzium-Fluorid | 1-15 |
| Lithium-Fluorid | 2-20 |
| Magnesium-Fluorid | 2-12 |
| Barium-Fluorid | 1-7 |
| Kalium-Chlorid | 15-35 |
| Natrium-Chlorid | 10-40 |
| Alkalisch-Erdmetall Chlorid | die anderen |

2. Flussmittel durch p.1 dem folgenden Teilverhältnis, massen %:
| | |
|---|---|
| Kalzium-Fluorid | 15 |
| Lithium-Fluorid | 2 |
| Magnesium-Fluorid | 2 |
| Barium-Fluorid | 1 |
| Kalium-Chlorid | 15 |
| Natrium-Chlorid | 40 |
| Alkalisch-Erdmetall Chlorid | 15 |

3. Flussmittel durch p.1 dem folgenden Teilverhältnis, massen %:
| | |
|---|---|
| Kalzium-Fluorid | 1 |
| Lithium-Fluorid | 20 |
| Magnesium-Fluorid | 2 |
| Barium-Fluorid | 7 |
| Kalium-Chlorid | 35 |
| Natrium-Chlorid | 10 |
| Alkalisch-Erdmetall Chlorid | 25 |

4. Flussmittel durch p.1 dem folgenden Teilverhältnis, massen %:
| | |
|---|---|
| Kalzium-Fluorid | 7 |
| Lithium-Fluorid | 10 |
| Magnesium-Fluorid | 6 |
| Barium-Fluorid | 4 |
| Kalium-Chlorid | 25 |
| Natrium-Chlorid | 30 |
| Alkalisch-Erdmetall Chlorid | 18 |

5. Flussmittel durch p.1 dem folgenden Teilverhältnis, massen %:
| | |
|---|---|
| Kalzium-Fluorid | 15 |
| Lithium-Fluorid | 20 |
| Magnesium-Fluorid | 2 |
| Barium-Fluorid | 1 |
| Kalium-Chlorid | 35 |
| Natrium-Chlorid | 10 |
| Alkalisch-Erdmetall Chlorid | 17 |

## Revendications

1. Le flux pour le soudage, en contenant le fluorure de calcium, fluorure de lithium, fluorure de magnésium, fluorure de baryum, chlorure de potassium et chlorure de sodium et chlorure en métal de terre d'alcali sous le rapport de composantes suivant, % masse :
| | |
|---|---|
| Fluorure de calcium | 1-15 |
| Fluorure de lithium | 2-20 |
| Fluorure de magnésium | 2-12 |
| Fluorure de baryum | 1-7 |
| Chlorure de potassium | 15-35 |
| Chlorure de sodium | 10-40 |
| Chlorure du métal de terre d'alcali | les autres |

2. Le flux par p. 1 sous le rapport de composantes suivant, % masse :
| | |
|---|---|
| Fluorure de calcium | 15 |
| Fluorure de lithium | 2 |
| Fluorure de magnésium | 2 |
| Fluorure de baryum | 1 |
| Chlorure de potassium | 40 |
| Chlorure du métal de terre d'alcali | 15 |

3. Le flux par p. 1 sous le rapport de composantes suivant, % masse :
| | |
|---|---|
| Fluorure de calcium | 1 |
| Fluorure de lithium | 20 |
| Fluorure de magnésium | 2 |
| Fluorure de baryum | 7 |
| Chlorure de potassium | 35 |
| Chlorure de sodium | 10 |
| Chlorure du métal de terre d'alcali | 25 |

4. Le flux par p. 1 sous le rapport de composantes suivant, % masse :
| | |
|---|---|
| Fluorure de calcium | 7 |
| Fluorure de lithium | 10 |
| Fluorure de magnésium | 6 |
| Fluorure de baryum | 4 |
| Chlorure de potassium | 25 |
| Chlorure de sodium | 30 |
| Chlorure du métal de terre d'alcali | 18 |

5. Le flux par p. 1 sous le rapport de composantes suivant, % masse :
| | |
|---|---|
| Fluorure de calcium | 15 |
| Fluorure de lithium | 20 |
| Fluorure de magnésium | 2 |
| Fluorure de baryum | 1 |
| Chlorure de potassium | 35 |
| Chlorure de sodium | 10 |
| Chlorure du métal de terre d'alcali | 17 |
